# EUROPEAN PATENT SPECIFICATION

(11) **EP 4 328 850 B1**
(45) Date of publication and mention of the grant of the patent: **09.12.2026**
(21) Application number: 23179208.6
(22) Date of filing: 14.06.2023
(51) Int. Cl.: G06T 3/4038

(54) **APPARATUS AND METHOD FOR IMAGE STITCHING BASED ON ARTIFICIAL INTELLIGENCE FOR INSPECTING WIND TURBINES**
VORRICHTUNG UND VERFAHREN ZUM ANEINANDERHEFTEN VON BILDERN AUF DER BASIS VON KÜNSTLICHER INTELLIGENZ ZUR INSPEKTION VON WINDTURBINEN
APPAREIL ET PROCÉDÉ D'ASSEMBLAGE D'IMAGES SUR LA BASE D'INTELLIGENCE ARTIFICIELLE POUR L'INSPECTION D'ÉOLIENNES

(30) Priority: 23.08.2022 KR 20220105798
(43) Date of publication of application: 28.02.2024
(73) Proprietor: Nearthlab Inc., Seoul 06246 (KR)
(72) Inventor: Moon, Jong Sik, Seoul (KR); Back, Seung Ho, Seoul (KR); Kwon, Hyeok Joon, Seoul (KR)
(74) Representative: AWA Sweden AB

(56) References cited:
- CN-A- 109 961 398
- SUN JIAMING ET AL: "LoFTR: Detector-Free Local Feature Matching with Transformers", 2021 IEEE/CVF CONFERENCE ON COMPUTER VISION AND PATTERN RECOGNITION (CVPR), IEEE, 20 June 2021 (2021-06-20), pages 8918 - 8927, XP034008928, DOI: 10.1109/CVPR46437.2021.00881
- HUANG HAIBO ET AL: "An Image Registration Algorithm Based on Slope and Distance Ratio Constraints", 2019 IEEE INTERNATIONAL CONFERENCE ON SIGNAL, INFORMATION AND DATA PROCESSING (ICSIDP), IEEE, 11 December 2019 (2019-12-11), pages 1 - 5, XP033813453, DOI: 10.1109/ICSIDP47821.2019.9173328

## Description

### CROSS-REFERENCE TO RELATED APPLICATION

This application claims priority under 35 U.S.C §119 to Korean Patent Application No. 10-2022-0105798 filed on August 8, 2023, in the Korean Intellectual Property Office.

### TECHNICAL FIELD

The disclosure relates to apparatus and methods for image stitching based on artificial intelligence for inspecting wind turbines.

### BACKGROUND

The contents set forth in this section merely provide background information on the present embodiments and do not constitute prior art.

Recently, a technology for photographing using drones has been commercialized. In addition, the technology for photographing using drones is being practiced in conjunction with various technical fields, and there is a growing need for a defect detection system using artificial intelligence (AI) in order to inspect wind turbine blades.

There were cases of carrying out manually when inspecting wind turbine blades in the past, and in the case of proceeding manually in this manner, there were problems that a lot of personnel and various pieces of equipment were needed, and a lot of time and money could be spent.

Instead of this, in order to inspect wind turbine blades with a drone, accurate image acquisition of the blades is required. However, as it is difficult to capture the blades of a wind turbine in a single photograph, there is a need to capture by dividing into several photographs. Images taken by being divided into several photographs need to be combined into a single image via image stitching techniques.

However, since the accuracy of the technique for combining images taken by drones into one image is not high as of now, the reality is that there is a high demand for a technique for accurately combining images taken by drones into one image. For example, prior art document CN109961398A discusses a fan blade image segmentation and mesh optimization stitching method performing image foreground segmentation, to solve the problem that the target and background depth of field are too large, resulting in target splicing. Furthermore, the prior art document "LoFTR: Detector-Free Local Feature Matching with Transformers" by Sun Jiaming et. al. presents a detector-free local image feature matching that can establish accurate semidense matches with Transformers in a coarse-to-fine manner. Finally, the prior art document "An Image Registration Algorithm Based on Slope and Distance Ratio Constraints" by Huang Haibo et. al. discusses an image registration algorithm based on slope and distance ratio constraints to reduce matching time and maintain the matching precision in the field of computer vision, and can be applied in Image location, target tracking and image recognition.

This patent was supported by Korea institute of Energy Technology Evaluation and Plannig(KETEP) grant funded by the Korea government(MOTIE)(20219410100070, AI powered wind turbine blade inspection drone upgrade and development of AI based defect detection algorithm for inspection data management ICT platform)

### SUMMARY

An object to be achieved by the present disclosure is to provide an apparatus for image stitching based on artificial intelligence for inspecting wind turbines.

Another object to be achieved by the present disclosure is to provide a method for image stitching based on artificial intelligence for inspecting wind turbines.

The objects of the present disclosure are not limited to the objects mentioned above, and other objects and advantages of the present disclosure that have not been mentioned can be understood by the following description and will be more clearly understood by the embodiments of the present disclosure. Further, it will be readily appreciated that the objects and advantages of the present disclosure may be realized by the means set forth in the claims and combinations thereof.

According to some aspects of the disclosure, an image stitching apparatus for inspecting a wind turbine, comprises a preprocessing module configured to generate a preprocessed image pair by removing background areas around blades of a wind turbine from photographed images of the wind turbine captured by a drone, an initial match point determination module configured to determine first initial match points in the preprocessed image pair by using a pre-trained deep learning module, a valid match point determination module configured to determine non-utilized match points out of the determined first initial match points, and determine valid match points by excluding the determined non-utilized match points from the determined first initial match
points, and an image stitching module configured to perform image stitching between a plurality of images, wherein the non-utilized match points comprise at least one of first non-utilized match points determined based on contours of the blades in the preprocessed image pair, second non-utilized match points determined based on absolute values of slopes between the corresponding first initial match points in the preprocessed image pair, and third non-utilized match points determined based on combined values of degrees of position change of each of the first initial match points in the preprocessed image pair.

According to some aspects, wherein the valid match point determination module comprises a first non-utilized match point determination unit configured to determine first initial match points existing at a predetermined distance or less from the contours of the blades out of the first initial match points as the first non-utilized match points.

According to some aspects, wherein the valid match point determination module comprises a second non-utilized match point determination unit configured to determine first initial match points in which absolute values of slopes between the corresponding first initial match points in the preprocessed image pair are less than or equal to a predetermined value as the second non-utilized match points when a difference between pieces of location information of the drone corresponding to each image in the preprocessed image pair is greater than or equal to a threshold.

According to some aspects, wherein the valid match point determination module comprises a third non-utilized match point determination unit configured to calculate degrees of position change of the plurality of first initial match points in the preprocessed image pair, respectively, and determine the third non-utilized match points based on an average value of the calculated degrees of position change of each first initial match point.

According to some aspects, wherein the valid match point determination module comprises a calculation unit configured to determine the valid match points by excluding the first to third non-utilized match points in sequence from the first initial match points according to predetermined conditions regarding the number of the first initial match points and the number of the first to third non-utilized match points.

According to some aspects, wherein the calculation unit determines first candidate match points by excluding the first non-utilized match points and the second non-utilized match points in sequence from the first initial match points and determines whether the number of the determined first candidate match points exceeds a first reference number.

According to some aspects, wherein if the number of the determined first candidate match points exceeds the first reference number, the calculation unit determines a result obtained by excluding the third non-utilized match points from the first candidate match points as the valid match points, and the image stitching module performs image stitching between two images of the preprocessed image pair based on the determined valid match points.

According to some aspects, wherein if the number of the determined first candidate match points is less than or equal to the first reference number, the preprocessing module generates a cropped image pair by cropping the photographed images according to a predetermined criterion, the initial match point determination module determines second initial match points in the cropped image pair by using the pre-trained deep learning module, and the calculation unit determines the valid match points based on the determined second initial match points.

According to some aspects, wherein the calculation unit determines second candidate match points by excluding fourth non-utilized match points and fifth non-utilized match points in sequence from the second initial match points, and determines whether the number of the determined second candidate match points exceeds a second reference number, and wherein the fourth non-utilized match points are determined based on the contours of the blades in the cropped image pair, and the fifth non-utilized match points are determined based on absolute values of slopes between the corresponding second initial match points in the cropped image pair.

According to some aspects, wherein if the number of the determined second candidate match points exceeds the second reference number, the calculation unit determines a result obtained by excluding sixth non-utilized match points from the determined second candidate match points as the valid match points, and the image stitching module performs image stitching between two images of the cropped image pair based on the determined valid match points, and wherein the sixth non-utilized match points are determined based on combined values of a degree of position change of each of the second initial match points in the cropped image pair.

While the present inventive concept has been particularly shown and described with reference to exemplary embodiments thereof, it will be understood by those of ordinary skill in the art that various changes in form and details may be made therein without departing from the spirit and scope of the present inventive concept as defined by the following claims. It is therefore desired that the present embodiments be considered in all respects as illustrative and not restrictive, reference being made to the appended claims rather than the foregoing description to indicate the scope of the disclosure.

The image stitching apparatus for inspecting a wind turbine of the present disclosure has a remarkable effect of being able to accurately provide the location information of the defects present in the blades by stitching several photographs of the blades of the wind turbine into one photograph.

In addition, the image stitching apparatus for inspecting a wind turbine of the present disclosure has a novel effect of being able to provide the location information of the defects present in the blades more accurately by extracting match points after going through a preprocessing process of removing the background area around the blades.

Further, the image stitching apparatus for inspecting a wind turbine of the present disclosure has a remarkable effect of being able to determine a sufficient number of initial match points by determining the initial match points while maintaining a relatively high resolution through the cropping process.

Moreover, the image stitching apparatus for inspecting a wind turbine of the present disclosure has a novel effect of being able to perform image stitching based on more accurate match points by determining non-utilized match points from the determined initial match points, excluding them, and then performing image stitching.

Furthermore, the image stitching apparatus for inspecting a wind turbine of the present disclosure has a remarkable effect of being able to reduce various errors that may occur in extracting match points for image stitching of blades by determining non-utilized match points via various criteria.

In addition, the image stitching apparatus for inspecting a wind turbine of the present disclosure has a novel effect of being able to determine more accurate valid match points by determining the initial match points around the blade as the non-utilized match points and excluding them. That is, the image stitching apparatus for inspecting a wind turbine of the present disclosure has a novel effect of being able to reduce match point determination errors that may occur according to the process of removing the background area during the preprocessing process described above.

Further, the image stitching apparatus for inspecting a wind turbine of the present disclosure has a novel effect of being able to reduce match point determination errors that may occur according to the characteristics (repetition of similar shapes) of the structures formed on the blades by determining the second non-utilized match points based on the absolute values of the slopes between the corresponding initial match points in the preprocessed image pair and excluding them from the initial match points.

Moreover, the image stitching apparatus for inspecting a wind turbine of the present disclosure has a novel effect of being able to determine the valid match points by comprehensively taking into account the degrees of position change of the plurality of initial match points by determining the third non-utilized match points based on the combined values of the degree of position change of each of the initial match points in the preprocessed image pair and excluding them from the initial match points.

Furthermore, the image stitching apparatus for inspecting a wind turbine of the present disclosure can exclude the non-utilized match points in sequence from the initial match points according to predetermined conditions regarding the number of initial match points and the number of non-utilized match points, and accordingly, has a remarkable effect of being able to reduce the amount of calculation when performing image stitching.

Further, the image stitching apparatus for inspecting a wind turbine of the present disclosure has a remarkable effect of being able to provide visual information to the client more accurately by stitching several photographs of the blades of the wind turbine into one photograph.

In addition to the contents described above, specific effects of the present disclosure will be described together while describing the following specific details for carrying out the present disclosure.

### BRIEF DESCRIPTION OF THE DRAWINGS

FIG. 1 shows an image stitching system for inspecting a wind turbine in accordance with some embodiments of the present disclosure;
FIG. 2 is a block diagram of an image stitching apparatus for inspecting a wind turbine in accordance with some embodiments of the present disclosure;
FIG. 3 shows the preprocessing module of FIG. 2 in accordance with some embodiments of the present disclosure;
FIG. 4a shows the initial match point determination module of FIG. 2 in accordance with some embodiments of the present disclosure;
FIG. 4b shows determined initial match points in accordance with some embodiments of the present disclosure;
FIG. 5 is a block diagram of the valid match point determination module of FIG. 2 in accordance with some embodiments of the present disclosure;
FIG. 6a is a diagram for describing a process of determining first non-utilized match points in accordance with some embodiments of the present disclosure;
FIG. 6b is a diagram for describing a process of determining second non-utilized match points in accordance with some embodiments of the present disclosure;
FIG. 6c is a diagram for describing a process of determining third non-utilized match points in accordance with some embodiments of the present disclosure;
FIG. 7 is a block diagram of an image stitching apparatus for inspecting a wind turbine in accordance with some embodiments of the present disclosure;
FIG. 8a shows the preprocessing module of FIG. 7 in accordance with some embodiments of the present disclosure;
FIG. 8b shows the initial match point determination module of FIG. 7 in accordance with some embodiments of the present disclosure;
FIG. 8c shows the valid match point determination module of FIG. 7 in accordance with some embodiments of the present disclosure;
FIG. 9 is a flowchart of an image stitching method for inspecting a wind turbine in accordance with some embodiments of the present disclosure; and
FIG. 10 is a detailed flowchart of an image stitching method for inspecting a wind turbine in accordance with some other embodiments of the present disclosure.

### DETAILED DESCRIPTION OF THE PREFERRED EMBODIMENTS

The terms or words used in the present description and the claims should not be construed as limited to their ordinary or lexical meanings. They should be construed as the meaning and concept in line with the technical idea of the present disclosure based on the principle that the inventor can define the concept of terms or words in order to describe his/her own invention in the best possible way. Further, since the embodiment described herein and the configurations illustrated in the drawings are merely example embodiments in which the present disclosure is realized and do not represent all the technical ideas of the present disclosure, it should be understood that there may be various equivalents, variations, and applicable examples that can replace them at the time of filing this application.

Although terms such as first, second, A, B, etc. used in the present description and the claims may be used to describe various components, the components should not be limited by these terms. These terms are used only for the purpose of distinguishing one component from another. For example, a first component may be referred to as a second component, and similarly, a second component may be referred to as a first component, without departing from the scope of the present disclosure. The term 'and/or' includes a combination of a plurality of related listed items or any item of the plurality of related listed items.

The terms used in the present description and the claims are merely used to describe particular embodiments and are not intended to limit the present disclosure. Singular expressions include plural expressions unless the context explicitly indicates otherwise. In the present application, terms such as "comprise," "have," etc. should be understood as not precluding the possibility of existence or addition of features, numbers, steps, operations, components, parts, or combinations thereof described herein.

Unless defined otherwise, all terms used herein, including technical or scientific terms, have the same meaning as commonly understood by those of ordinary skill in the art to which the present disclosure pertains.

Terms such as those defined in commonly used dictionaries should be construed as having a meaning consistent with the meaning in the context of the relevant art, and are not to be construed in an ideal or excessively formal sense unless explicitly defined in the present application. In addition, each configuration, procedure, process, method, or the like included in each embodiment of the present disclosure may be shared to the extent that they are not technically contradictory to each other.

In addition, the term "module" used herein refers to a software or hardware component, and a "module" performs certain roles. However, a "module" is not meant to be limited to software or hardware. A "module" may be configured to reside on an addressable storage medium, or may be configured to run one or more processors. Thus, as one example, a "module" includes components such as software components, object-oriented software components, class components, and task components, processes, functions, properties, procedures, subroutines, segments of program code, drivers, firmware, microcode, circuits, data, databases, data structures, tables, arrays, and variables. The functionality provided in the components and "modules" may be combined into fewer components and "modules" or further separated into additional components and "modules."

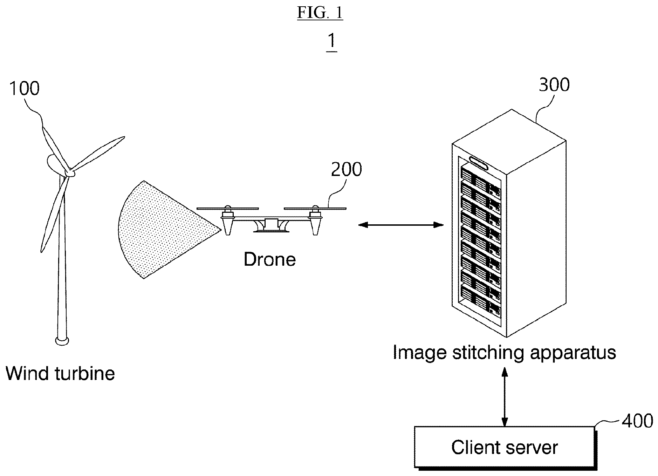

Hereinafter, an image stitching apparatus and method for inspecting a wind turbine in accordance with some embodiments of the present disclosure will be described with reference to FIGS. 1 to 10.

FIG. 1 shows an image stitching system 1 for inspecting a wind turbine in accordance with some embodiments of the present disclosure.

Referring to FIG. 1, an image stitching system 1 for inspecting a wind turbine in accordance with some embodiments of the present disclosure (hereinafter referred to as an "image stitching system") is a system for stitching images of the blades of a wind turbine 100 photographed by a drone 200, and may include a drone 200 for photographing the wind turbine 100, an image stitching apparatus 300 for inspecting the wind turbine (hereinafter referred to as an "image stitching apparatus"), and a client server 400.

The drone 200, the image stitching apparatus 300, and the client server 400 that form the image stitching system 1 in accordance with an embodiment of the present disclosure may be communicatively connected to one another via a communication network. Here, the communication network may include a wireless communication network and a wired communication network. Further, the communication network may be a short-distance communication network (e.g., Bluetooth, WiFi direct or infrared data association (IrDA), Radio Frequency (RF)), or a long-distance communication network (e.g., a cellular network, Internet, or a computer communication network (e.g., LAN or WAN)). For example, the drone 200 and the image stitching apparatus 300 of the present disclosure may be communicatively connected to each other using a short-distance communication network, and the image stitching apparatus 300 and the client server 400 may be communicatively connected to each other using a wireless communication network or a wired communication network.

The drone 200 may fly according to a predetermined flight command of the wind turbine 100 and/or a control command for flight, operation, or the like received from the image stitching apparatus 300 and may photograph the wind turbine 100.

In this case, the drone 200 may be equipped with a camera for photographing the wind turbine 100. Here, the image information photographed by the camera of the drone 200 and provided to the image stitching apparatus 300 may be in the form of still images, i.e., images. However, the present disclosure is not limited thereto, and it is quite apparent to those skilled in the art that the image information may include a video in which several images are stored in frame format. However, in the present specification, an example in which the image information includes only images will be described for the convenience of description.

Next, the drone 200 may transmit the photographed images of the wind turbine 100 and the metadata of the drone 200 to the image stitching apparatus 300.

At this time, the metadata may include geometric information of the drone 200. For example, the metadata may include location information, flight direction, flight speed, heading information, gimbal angle information, and the like of the drone 200, but embodiments are not limited thereto. In this case, the location information of the drone 200 may include, for example, GPS information or the like of the drone 200, but is not limited thereto.

The drone 200 may be a flying drone that photographs the wind turbine 100 and/or the surrounding environment of the wind turbine 100, but embodiments are not limited thereto, and it may be a ground drone, an underwater drone, or the like.

The image stitching apparatus 300 may provide a wind turbine inspection platform. Here, the wind turbine inspection platform may refer to a means capable of utilizing services that the image stitching apparatus 300 may provide, such as a web page provided via a communication network, a smartphone application, and the like. The image stitching apparatus 300 may stitch a plurality of photographed images of the wind turbine transmitted from the drone 200 via the wind turbine inspection platform, generate a stitched image, and transfer the generated stitched image to the client server 400.

As some examples, the image stitching apparatus 300 may determine initial match points and non-utilized match points from the photographed images transmitted from the drone 200, and perform image stitching based on the determined initial match points and non-utilized match points. For example, the image stitching apparatus 300 may determine valid match points by excluding the determined non-utilized match points from the determined initial match points, and perform image stitching based on the determined valid match points.

In this case, the image stitching apparatus 300 of the present disclosure has a remarkable effect of being able to accurately provide the location information of defects present in the blades by stitching several photographs of the blades of the wind turbine into one photograph.

The image stitching apparatus 300 may preprocess the photographed images transmitted from the drone 200 and determine initial match points based on the preprocessed results. For example, the image stitching apparatus 300 may perform preprocessing such as image pair selection, background area removal, resizing, cropping, and the like on the images of the wind turbine 100 photographed by the drone 200, and determine initial match points based on the preprocessed results, but embodiments are not limited thereto.

In this case, the image stitching apparatus 300 of the present disclosure has a novel effect of being able to provide the location information of defects present in the blades more accurately by extracting match points after going through a preprocessing process of removing the background area around the blades, for example.

The image stitching apparatus 300 may determine the initial match points by using a LoFTR (Local Feature Matching with Transformers) module, but is not limited thereto.

The image stitching apparatus 300 may determine non-utilized match points based on the contours of the blades, the location information of the drone 200, the absolute values of the slopes between the corresponding initial match points in the preprocessed image pair, combined values of the degrees of position change of a plurality of initial match points in the preprocessed image pair, etc., but is not limited thereto.

In this case, the image stitching apparatus 300 of the present disclosure has a novel effect of being able to perform image stitching based on more accurate match points by determining non-utilized match points from the extracted match points, excluding them, and then performing image stitching. Further, the image stitching apparatus 300 has a remarkable effect of being able to reduce various errors that may occur in extracting match points for image stitching of blades by determining non-utilized match points via various criteria.

The client server 400 may receive the image stitching results of the photographed images of the wind turbine 100 from the image stitching apparatus 300.

The client server 400 may use the wind turbine inspection platform or may be an apparatus having the wind turbine inspection platform installed therein. The client server 400 may be a computing device including at least one processor, but is not limited thereto.

The client server 400 may display the image stitching results received from the image stitching apparatus 300 via a display screen. As some examples, the client server 400 may include at least one of smartphones, tablet personal computers, mobile phones, video phones, e-book readers, desktop PCs, laptop PCs, netbook computers, workstations, servers, PDAs (personal digital assistants), PMPs (portable multimedia players), MP3 players, mobile medical devices, cameras, or wearable devices, but is not limited thereto.

In the following, a specific configuration of the image stitching apparatus 300 of the configurations of the image stitching system 1 for inspecting a wind turbine will be described in detail.

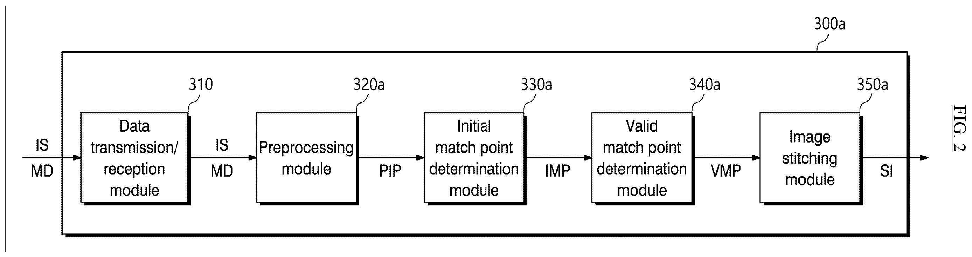

FIG. 2 is a block diagram of an image stitching apparatus 300a in accordance with some embodiments of the present disclosure.

Referring to FIGS. 1 and 2, the image stitching apparatus 300a may include a data transmission/reception module 310, a preprocessing module 320a, an initial match point determination module 330a, a valid match point determination module 340a, and an image stitching module 350a.

The data transmission/reception module 310 may receive data from the drone 200 and may provide a stitched image SI that is an image stitching result to the client server 400.

For example, the data transmission/reception module 310 may receive photographed images (image sequence, hereinafter referred to as "IS") of the wind turbine 100 and metadata (hereinafter referred to as "MD") from the drone 200.

The number of photographed images IS of the wind turbine 100 may be at least two or more, i.e., plural. The photographed images IS of the wind turbine 100 may include photographed images of the body, blades, and the like of the wind turbine 100, but are not limited thereto. In the following, it is described assuming that the photographed images IS of the wind turbine 100 are photographed images of the blades of the wind turbine 100 for the convenience of description.

The metadata MD may include geometric information of the drone 200 as described above. For example, the metadata MD may include location information, flight direction, flight speed, heading information, gimbal angle information, and the like of the drone 200, but embodiments are not limited thereto. In this case, the location information of the drone 200 may include, for example, GPS information or the like of the drone 200, but is not limited thereto.

The data transmission/reception module 310 may transfer the photographed images IS of the wind turbine 100 and the metadata MD to the preprocessing module 320a.

The preprocessing module 320a may generate a preprocessed image pair (hereinafter referred to as "PIP") based on the received data.

For example, the preprocessing module 320a may generate a preprocessed image pair PIP based on the photographed images IS of the wind turbine 100 and/or the metadata MD.

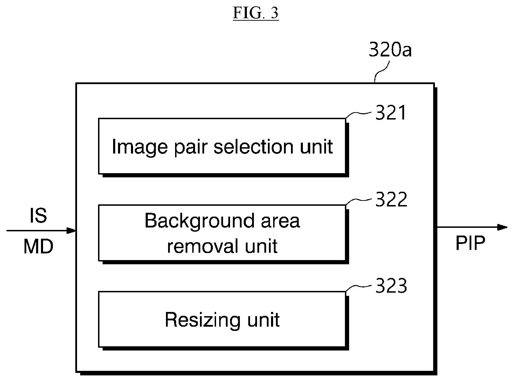

A specific preprocessing method of the preprocessing module 320a will be described in more detail with reference to FIG. 3.

FIG. 3 shows the preprocessing module 320a of FIG. 2 in accordance with some embodiments of the present disclosure.

Referring to FIGS. 1, 2, and 3, the preprocessing module 320a may include an image pair selection unit 321, a background area removal unit 322, and a resizing unit 323.

The image pair selection unit 321 may select an image pair to perform image stitching out of a plurality of photographed images IS of the wind turbine 100.

As some examples, the image pair selection unit 321 may select, as an image pair, any two images out of a first photographed image set obtained by photographing the same blade among the plurality of photographed images IS of the wind turbine 100.

As some other examples, the image pair selection unit 321 may select an image pair out of the plurality of photographed images IS of the wind turbine 100 based on the metadata MD of the drone 200. For the convenience of description, an example in which the metadata MD is the location information of the drone 200 will be described.

For example, the image pair selection unit 321 may select, as an image pair, any two images out of a second photographed image set in which the difference between the pieces of location information of the drone 200 is less than or equal to a predetermined value among the plurality of photographed images IS of the wind turbine 100. At this time, the image pair selection unit 321 may select, as an image pair, two images having a minimum difference between the pieces of location information of the drone 200 out of the second photographed image set, but is not limited thereto.

The background area removal unit 322 may remove the background area around the blades of the wind turbine 100 in the selected image pair.

At this time, the background area removal unit 322 may remove the background area by changing the color value of the areas other than the blades in the image pair. For example, the background area removal unit 322 may remove the background area by processing the areas other than the blades with black (RGB=(0,0,0)), but is not limited thereto.

As some examples, the background area removal unit 322 may derive the contours of the blades via a predetermined algorithm in the image pair, then determine the area outside the derived contours as the background area, and change the RGB values of the determined background area to (0,0,0). For example, the background area removal unit 322 may derive the contours of the blades via a predetermined image contour analysis model or the like, but is not limited thereto.

As some other examples, the background area removal unit 322 may determine the RGB values of the blades in the image pair, then determine an area having a color that differs from the RGB values of the blades by a threshold or more as the background area, and change the RGB values of the determined background area to (0,0,0).

In general, conventional computer vision algorithms tried to match by extracting match points in images, but if the blades of the wind turbine 100 were white, there were no noticeable match points on the blades, and thus feature points were extracted from the background. However, since the wind turbine 100 is located at a fairly high altitude from the ground, the distance between the drone 200 and the blades and the distance between the drone 200 and the background on the ground tend to show a quite large difference. Therefore, when image stitching was performed by extracting match points from the background rather than the blades, there was a problem that the accuracy of image stitching was considerably low.

In order to solve this problem, the image stitching apparatus 300a of the present disclosure can determine match points on the blades rather than the background, and remove the background area from the image pair for this purpose. That is, the image stitching apparatus 300a of the present disclosure has a novel effect of being able to provide the location information of the defects present in the blades more accurately by extracting match points after going through a preprocessing process of removing the background area around the blades.

The resizing unit 323 may resize each image of the image pair.

In general, if the sizes of photographed images captured by the drone 200 are large (e.g., 8000*5000), they may be somewhat inappropriate for determining initial match points. Therefore, the resizing unit 323 may resize each image of the image pair to a lower resolution.

At this time, the resizing unit 323 may resize the images by utilizing a predetermined program, model, or the like. The resizing unit 323 may be omitted from the preprocessing module 320a.

The photographed images IS processed by the image pair selection unit 321, the background area removal unit 322, and/or the resizing unit 323 may be outputted as a preprocessed image pair PIP from the preprocessing module 320a.

Referring again to FIGS. 1 and 2, the initial match point determination module 330a may determine initial match points (hereinafter referred to as "IMP") in the preprocessed image pair PIP.

At this time, the initial match points IMP may include corresponding features between the two images in the preprocessed image pair PIP, for example, dots or stains on the blades, fine structures formed on the blades (e.g., a vortex generator), and so on, but are not limited thereto.

As some examples, the initial match point determination module 330a may determine the initial match points IMP by using a pre-trained deep learning module. For example, the initial match point determination module 330a may determine the initial match points IMP by using a LoFTR (Local Feature Matching with Transformers, hereinafter referred to as "LoFTR") module, but is not limited thereto.

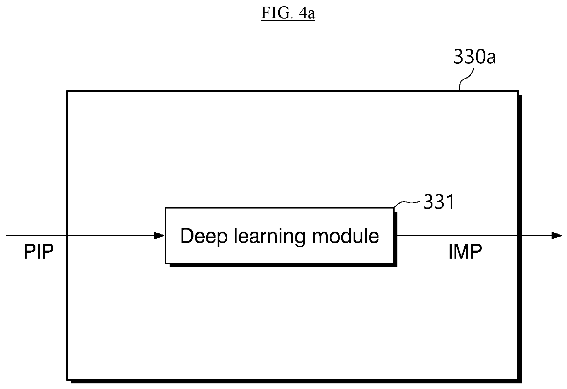

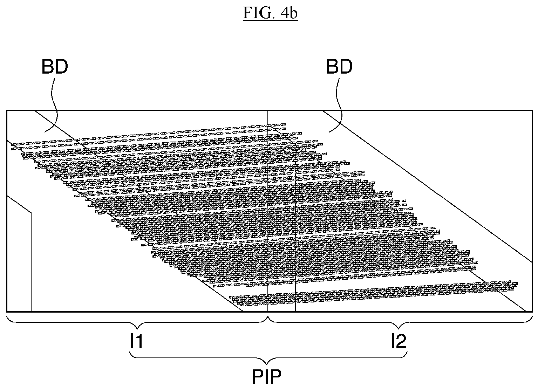

The process of determining the initial match points IMP will be described in detail with reference to FIGS. 4a and 4b.

FIG. 4a shows the initial match point determination module 330a of FIG. 2 in accordance with some embodiments of the present disclosure. FIG. 4b shows determined initial match points in accordance with some embodiments of the present disclosure.

Referring to FIGS. 3 and 4a, the initial match point determination module 330a may include a pre-trained deep learning module 331. In this case, the pre-trained deep learning module 331 may include, for example, the LoFTR module as described above, but is not limited thereto.

The pre-trained deep learning module 331 may determine the initial match points IMP from the preprocessed image pair PIP and output them.

Referring to FIGS. 3 and 4b, FIG. 4b shows match lines connecting the initial match points determined via the pre-trained deep learning module 331 in each image I1, I2 of the preprocessed image pair PIP obtained by photographing the blades BD.

At this time, dots or stains present in the blades BD, fine structures formed on the blades BD, and so on may be determined as the initial match points via the LoFTR module or the like, as described above.

Referring again to FIGS. 1 and 2, the valid match point determination module 340a may determine non-utilized match points out of the determined initial match points IMP, and determine valid match points (hereinafter referred to as "VMP") based on the determined initial match points IMP and non-utilized match points.

As some examples, the valid match point determination module 340a may determine the valid match points VMP by excluding the non-utilized match points from the initial match points IMP.

Through this process, the image stitching apparatus 300a of the present disclosure has a novel effect of being able to perform image stitching based on more accurate match points by excluding the non-utilized match points from the determined initial match points and then performing image stitching.

The non-utilized match points may include first non-utilized match points determined based on the contours of the blades, second non-utilized match points determined based on the absolute values of the slopes between the corresponding initial match points in the preprocessed image pair, third non-utilized match points determined based on combined values of the degree of position change of each of the initial match points in the preprocessed image pair, and the like, but examples of the non-utilized match points are not limited thereto.

As such, the image stitching apparatus 300a of the present disclosure has a remarkable effect of being able to reduce various errors that may occur in extracting match points for image stitching of blades by determining non-utilized match points via various criteria.

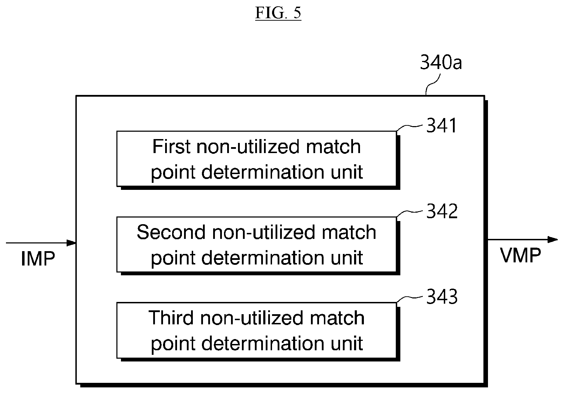

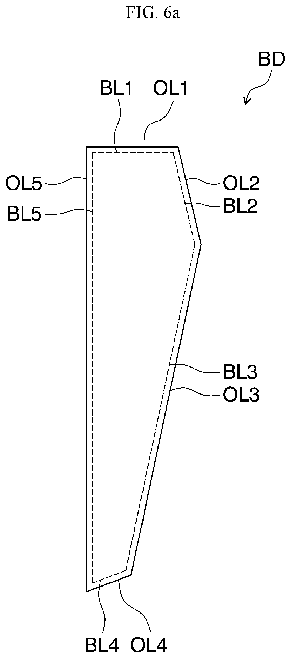

The valid match point determination module 340a will be described in detail with reference to FIGS. 5 and 6a to 6c.

FIG. 5 is a block diagram of the valid match point determination module 340a of FIG. 2 in accordance with some embodiments of the present disclosure.

Referring to FIG. 5, the valid match point determination module 340a may include a first non-utilized match point determination unit 341, a second non-utilized match point determination unit 342, and a third non-utilized match point determination unit 343.

The valid match point determination module 340a may determine valid match points VMP based on the initial match points IMP. For example, the valid match point determination module 340a may determine the valid match points VMP by excluding the first to third non-utilized match points from the initial match points IMP.

The first non-utilized match point determination unit 341 may determine the first non-utilized match points based on the contours of the blades of the wind turbine.

As some examples, the first non-utilized match point determination unit 341 may determine the initial match points IMP existing at a predetermined distance or less from the contours of the blades out of the initial match points IMP as the first non-utilized match points. This will be described in detail with further reference to FIG. 6a.

FIG. 6a is a diagram for describing a process of determining first non-utilized match points in accordance with some embodiments of the present disclosure.

Referring to FIGS. 5 and 6a, the first non-utilized match point determination unit 341 may determine virtual contours BL1 to BL5 separated by a predetermined distance from the contours OL1 to OL5 of the blade.

In this case, the distances between the contours OL1 to OL5 of the blade and the virtual contours BL1 to BL5 may all be the same or different from each other. For example, the distance between OL1 and BL1 may be the same as or different from that between OL2 and BL2.

Next, the first non-utilized match point determination unit 341 may determine the initial match points IMP existing between the contours OL1 to OL5 of the blade and the virtual contours BL1 to BL5 out of the determined initial match points IMP as the first non-utilized match points.

Once the process of removing the background area around the blade is through as described above, the boundary between the blade and the background area, i.e., the image near the contours of the blade is highly likely to be uneven rather than smooth. In general, as a deep learning module associated with determining match points tends to recognize uniquely formed areas or points as match points, there is a possibility that the initial match point determination module (330a in FIG. 2) may determine such areas as initial match points IMP.

At this time, the valid match point determination unit 340a has a novel effect of being able to determine more accurate valid match points by determining the initial match points IMP around the blade as the first non-utilized match points and excluding them. That is, the valid match point determination unit 340a of the present disclosure has a novel effect of being able to reduce match point determination errors that may occur according to the process of removing the background area during the preprocessing process described above.

Referring again to FIG. 5, the second non-utilized match point determination unit 342 may determine the second non-utilized match points based on the absolute values of the slopes between the corresponding initial match points IMP in the preprocessed image pair.

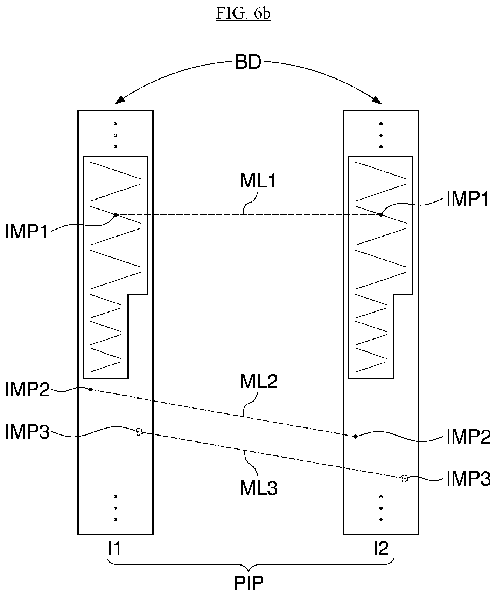

As some examples, the second non-utilized match point determination unit 342 may determine the second non-utilized match points based on the absolute values of the slopes between the corresponding initial match points IMP in the image pair when the difference between the pieces of location information of the drone corresponding to each image in the image pair is greater than or equal to a threshold. This will be described in detail with further reference to FIG. 6b.

FIG. 6b is a diagram for describing a process of determining second non-utilized match points in accordance with some embodiments of the present disclosure.

Referring to FIGS. 5 and 6b, FIG. 6b shows a preprocessed image pair PIP including a first image I1 and a second image I2, determined initial match points IMP1 to IMP3, and match lines ML1 to ML3 connecting between the determined initial match points IMP1 to IMP3.

The second non-utilized match point determination unit 342 may determine the second non-utilized match points based on the absolute values of the slopes between the initial match points IMP1 to IMP3 when the difference between the pieces of location information of the drone corresponding to each of the first image I1 and the second image I2 is greater than or equal to a predetermined threshold.

For the convenience of description, a case is assumed that the difference between the pieces of location information of the drone corresponding to each of the first image I1 and the second image I2 is greater than or equal to a predetermined threshold.

The second non-utilized match point determination unit 342 may determine the match lines ML1 to ML3 connecting between the initial match points IMP1 to IMP3 in the preprocessed image pair PIP.

Next, the second non-utilized match point determination unit 342 may determine the second non-utilized match points based on the absolute value of the slope of each of the match lines ML1 to ML3.

As one example, the second non-utilized match point determination unit 342 may determine, as the second non-utilized match points, the initial match points corresponding to match lines whose absolute values of the slopes are less than or equal to a predetermined value out of the match lines ML1 to ML3.

Assuming that the absolute value of the slope of the match line ML1 in FIG. 6b is less than or equal to a predetermined value, the second non-utilized match point determination unit 342 may at this time determine the initial match point IMP1 corresponding to the match line ML1 as the second non-utilized match point.

As another example, the second non-utilized match point determination unit 342 may determine the initial match points corresponding to a match line having the minimum absolute value of the slope out of the match lines ML1 to ML3 as the second non-utilized match points.

If described taking FIG. 6b as an example, FIG. 6b shows that the absolute value of the slope of the match line ML1 is slightly smaller than the absolute values of the slopes of the other match lines ML2 and ML3. At this time, the second non-utilized match point determination unit 342 may determine the initial match points IMP1 corresponding to the match line ML1 as the second non-utilized match points.

In general, when a drone photographs blades while moving therearound, the pieces of location information (e.g., GPS values) of the drone in each image I1, I2 in the preprocessed image pair PIP differ, and at this time, the initial match points in each image I1, I2 will also be moved. However, in the case of the initial match points IMP1 shown in FIG. 6b, only slight movement is seen in each of the images I1 and I2 even though the drone actually photographed while moving. In this case, it may mean that the initial match points IMP1 are erroneously determined.

That is, this may mean a case where confusion is caused between similar shapes formed on the top, bottom, left, and right sides and they are determined as the initial match points even though they are not the same point, in the case of structures in which similar shapes are repeated, such as vortex generators.

Therefore, the valid match point determination unit 340a of the present disclosure has a novel effect of being able to determine more accurate valid match points by excluding the second non-utilized match points determined in the process described above. That is, the valid match point determination unit 340a of the present disclosure has a novel effect of being able to reduce match point determination errors that may occur according to the characteristics (repetition of similar shapes) of the structures formed on the blades.

Referring again to FIG. 5, the third non-utilized match point determination unit 343 may determine the third non-utilized match points based on combined values of the degree of position change of each of the initial match points IMP in the preprocessed image pair.

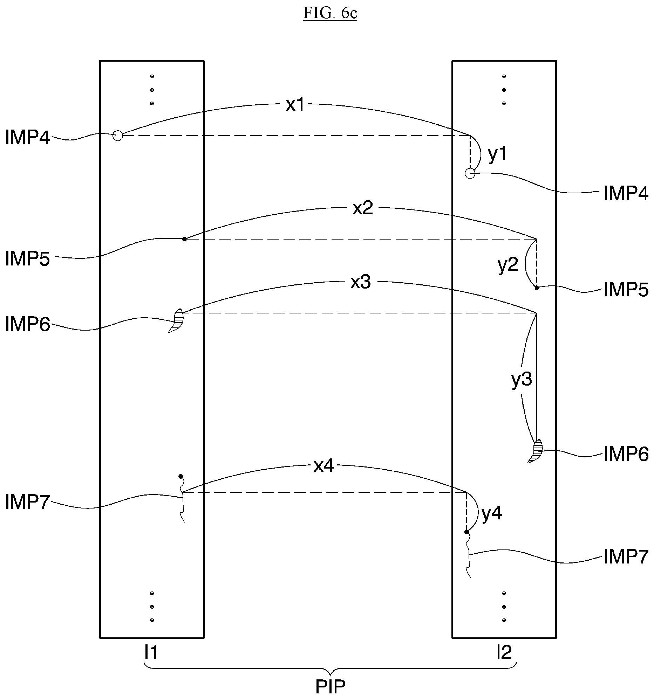

As some examples, the third non-utilized match point determination unit 343 may calculate the degrees of position change of the plurality of initial match points IMP in the preprocessed image pair, respectively, and determine the third non-utilized match points based on an average value of the calculated degrees of position change of each initial match point IMP. This will be described in detail with further reference to FIG. 6c.

FIG. 6c is a diagram for describing a process of determining third non-utilized match points in accordance with some embodiments of the present disclosure.

Referring to FIGS. 5 and 6c, FIG. 6c shows a preprocessed image pair PIP including a first image I1 and a second image I2 and determined initial match points IMP4 to IMP7.

The third non-utilized match point determination unit 343 may calculate the degrees of position change x1 to x4 and y1 to y4 of the plurality of initial match points IMP4 to IMP7 in the preprocessed image pair PIP, respectively, and determine the third non-utilized match points based on combined values of the calculated degrees of position change of each initial match point IMP4 to IMP7.

In this case, the combined value may include an average, sum, product, variance, standard deviation, etc., but is not limited thereto. For the convenience of description below, the combined value is described as an average value.

As some examples, the third non-utilized match point determination unit 343 may calculate the degrees of change x1 to x4 in the x-axis of the plurality of initial match points IMP4 to IMP7 in the preprocessed image pair PIP, and then calculate an average value of the calculated degrees of change (average of x1 to x4). Next, the third non-utilized match point determination unit 343 may determine the initial match points (e.g., IMP7) having a degree of change (e.g., x4) in the x-axis that differs from the calculated average value (average of x1 to x4) by a predetermined value or more as the third non-utilized match points.

As some other examples, the third non-utilized match point determination unit 343 may calculate the degrees of change y1 to y4 in the y-axis of the plurality of initial match points IMP4 to IMP7 in the preprocessed image pair PIP, and then calculate an average value of the calculated degrees of change (average of y1 to y4). Next, the third non-utilized match point determination unit 343 may determine the initial match points (e.g., IMP6) having a degree of change (e.g., y3) in the y-axis that differs from the calculated average value (average of y1 to y4) by a predetermined value or more as the third non-utilized match points.

As yet some other examples, the third non-utilized match point determination unit 343 may also determine the third non-utilized match points by using both the degrees of change x1 to x4 in the x-axis and the degrees of change y1 to y4 in the y-axis of the plurality of initial match points IMP4 to IMP7 in the preprocessed image pair PIP.

At this time, the valid match point determination unit 340a of the present disclosure has a novel effect of being able to determine more accurate valid match points VMP by excluding the third non-utilized match points determined in the process described above. That is, the valid match point determination unit 340a of the present disclosure can determine the non-utilized match points by comprehensively taking into account the degrees of position change of the plurality of initial match points IMP, and accordingly, has a novel effect of being able to reduce match point determination errors.

Referring again to FIGS. 1 and 2, the image stitching module 350a may generate a stitched image SI by performing image stitching between the two images of the preprocessed image pair PIP.

As some examples, the image stitching module 350a may generate a stitched image SI based on the determined valid match points VMP, and a predetermined image stitching algorithm and/or image stitching model.

For example, the image stitching module 350a may generate a stitched image SI in the manner of connecting, matching, or corresponding the coordinates, relative coordinates, and the like of the determined valid match points in the image via a predetermined image stitching algorithm and/or image stitching model.

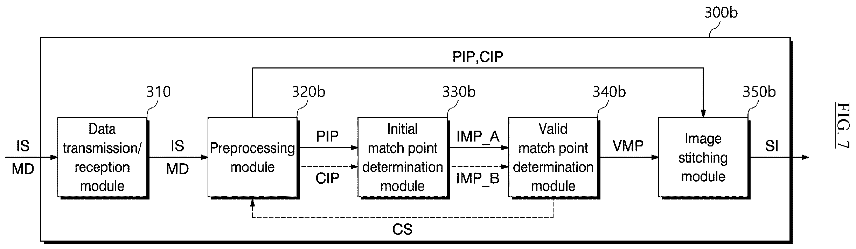

FIG. 7 is a block diagram of an image stitching apparatus 300b for inspecting a wind turbine in accordance with some embodiments of the present disclosure.

Referring to FIGS. 1 and 7, the image stitching apparatus 300b may include a data transmission/reception module 310, a preprocessing module 320b, an initial match point determination module 330b, a valid match point determination module 340b, and an image stitching module 350b.

The data transmission/reception module 310 has been described above with reference to FIG. 2, and will thus be omitted here.

The preprocessing module 320b may generate a preprocessed image pair PIP and/or a cropped image pair (hereinafter referred to as "CIP") based on the received data.

The process of generating the preprocessed image pair PIP by the preprocessing module 320b has been described in detail with reference to FIGS. 2 and 3, and will thus be omitted here.

The preprocessing module 320b may generate a cropped image pair CIP based on the photographed images IS of the wind turbine 100, the metadata MD, and a control signal (hereinafter referred to as "CS") of the valid match point determination module 340b.

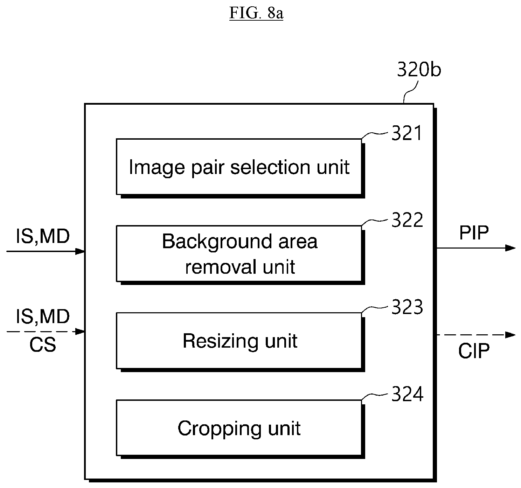

For example, the preprocessing module 320b may generate a cropped image pair CIP based on the photographed images IS of the wind turbine 100 and the metadata MD received from the data transmission/reception module 310, upon receipt of the control signal CS from the valid match point determination module 340b. This will be described in detail with further reference to FIG. 8a.

FIG. 8a shows the preprocessing module 320b of FIG. 7 in accordance with some embodiments of the present disclosure.

Referring to FIGS. 7 and 8a, the preprocessing module 320b may include an image pair selection unit 321, a background area removal unit 322, a resizing unit 323, and a cropping unit 324. The image pair selection unit 321, the background area removal unit 322, and the resizing unit 323 have been described above with reference to FIG. 3, and will thus be omitted here.

The cropping unit 324 may crop each image of the selected image pair.

As some examples, the cropping unit 324 may crop each image of the selected image pair into a predetermined number of pairs. For the convenience of description below, a case where a particular image pair includes a first image and a second image will be described as an example.

First, the cropping unit 324 may perform cropping based on arbitrary two points of the blade present in the first image. At this time, the arbitrary two points may refer to a 1/3 point (point A) and a 2/3 point (point B) on the basis of the vertical axis in the blade included in the first image, but are not limited thereto.

Thereafter, the cropping unit 324 may search in the second image for a point (point C) corresponding to point A of the first image and a point (point D) corresponding to point B of the first image by using the difference in location information of the drone 200 between the first image and the second image.

Next, the cropping unit 324 may perform cropping based on points C and D in the second image.

In general, if initial match points are determined in a state in which the resolution is reduced through the resizing process, there is a possibility that a sufficient number of initial match points may not be obtained due to low resolution. At this time, the image stitching apparatus 300b of the present disclosure may determine the initial match points while maintaining a relatively high resolution through the cropping process, and accordingly, has a remarkable effect of being able to determine a sufficient number of initial match points.

As some examples, whether to drive the cropping unit 324 may be determined according to predetermined conditions.

For example, the cropping unit 324 may be driven only when the control signal CS is generated and received from the valid match point determination module 340b.

At this time, the control signal CS may be generated based on the number of first initial match points determined by the initial match point determination module 330b and the number of non-utilized match points determined by the valid match point determination module 340b, as will be described later.

For example, the control signal CS may be generated if the number of first candidate match points determined by subtracting the first and second non-utilized match points from the first initial match points is less than or equal to a first reference number, but is not limited thereto.

As some examples, when the control signal CS is received, the preprocessing module 320b may generate a cropped image pair CIP by driving each particular component 321 to 324 of the preprocessing module 320b at the time of receiving the control signal CS. Alternatively, when the control signal CS is received, the cropping unit 324 may generate the cropped image pair CIP by performing cropping on the existing preprocessing result, i.e., the preprocessed image pair PIP.

That is, the generated cropped image pair CIP may be data reflecting the driving results of not only the cropping unit 324 but also the image pair selection unit 321, the background area removal unit 322, and/or the resizing unit 323 described above.

The photographed images IS processed by the cropping unit 324 may be outputted as the cropped image pair CIP from the preprocessing module 320b.

Referring again to FIGS. 1 and 7, the initial match point determination module 330b may determine the first initial match points IMP_A based on the preprocessed image pair PIP or may determine the second initial match points IMP_B based on the cropped image pair CIP.

In this case, the first initial match points IMP_A are the same as the initial match points IMP described above with reference to FIGS. 2 to 6c. Therefore, the process of determining the first initial match points IMP_A based on the preprocessed image pair PIP by the initial match point determination module 330b has been described above with reference to FIGS. 2, 4a, and 4b, and will thus be omitted here.

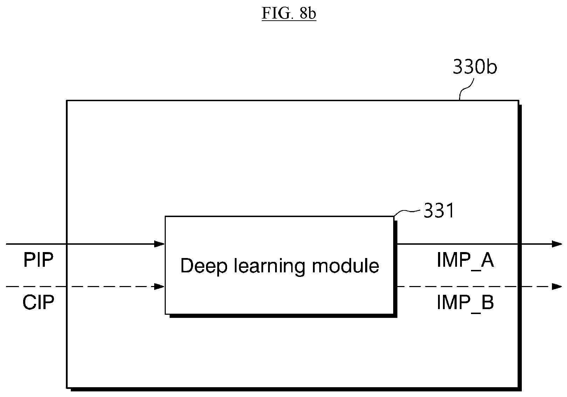

A process of determining the second initial match points IMP_B based on the cropped image pair CIP by the initial match point determination module 330b will be described in detail with reference to FIG. 8b.

FIG. 8b shows the initial match point determination module 330b of FIG. 7 in accordance with some embodiments of the present disclosure.

Referring to FIG. 8b, the initial match point determination module 330b may determine the second initial match points IMP_B from the cropped image pair CIP by using the pre-trained deep learning module 331 described above in FIG. 4a.

The pre-trained deep learning module 331 may include, for example, a LoFTR module as described above, but is not limited thereto.

As some examples, the pre-trained deep learning module 331 may determine the dots or stains present in the blades, fine structures formed on the blades, and so on of the cropped image pair CIP as the second initial match points.

Referring again to FIGS. 1 and 7, the valid match point determination module 340b may determine the valid match points VMP by using the first initial match points IMP_A, may determine the valid match points VMP by using the second initial match points IMP_B determined in response to the control signal CS, or may drop the first initial match points IMP_A and the second initial match points IMP_B.

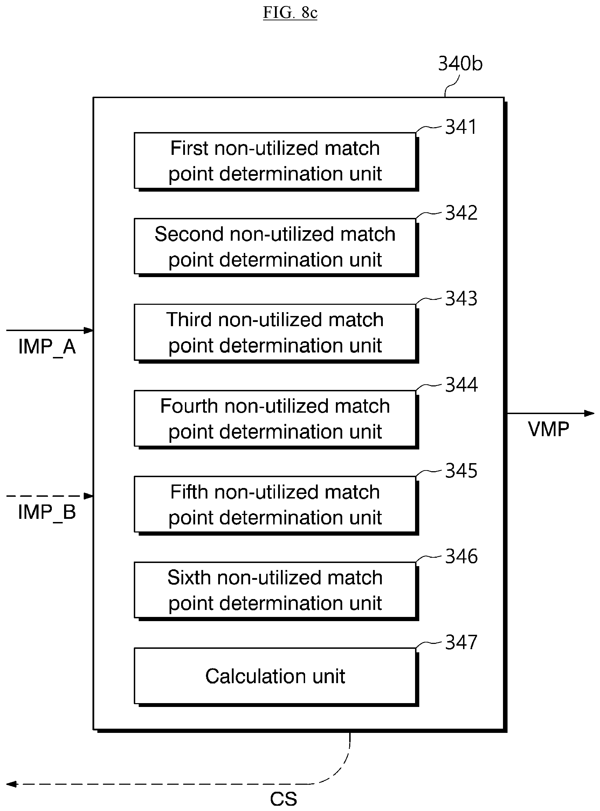

This will be described in more detail with reference to FIG. 8c.

FIG. 8c shows the valid match point determination module 340b of FIG. 7 in accordance with some embodiments of the present disclosure.

Referring to FIGS. 7 and 8c, the valid match point determination unit 340b may include first to sixth non-utilized match point determination units 341 to 346 and a calculation unit 347.

The first to third non-utilized match point determination units 341 to 343 for determining the first to third non-utilized match points for the first initial match points IMP_A have been described above with reference to FIG. 5, and will thus be omitted here.

The calculation unit 347 may determine the valid match points VMP by excluding the first to third non-utilized match points in sequence from the first initial match points IMP_A according to predetermined conditions regarding the number of first initial match points IMP_A and the number of first to third non-utilized match points.

For example, the calculation unit 347 may determine first candidate match points by excluding the first non-utilized match points and the second non-utilized match points in sequence from the first initial match points IMP_A, and determine whether the number of the determined first candidate match points exceeds a first reference number. The first reference number may be four, but it is apparent that the first reference number is not limited thereto.

Next, if the number of the determined first candidate match points exceeds the first reference number, the calculation unit 347 may determine the result obtained by excluding the third non-utilized match points from the first candidate match points as the valid match points VMP.

In contrast, if the number of the determined first candidate match points is less than or equal to the first reference number, the calculation unit 347 may generate the control signal CS.

The generated control signal CS may be a signal that causes the cropped image pair CIP to be generated by controlling the preprocessing module 320b and the second initial match points IMP_B to be determined by controlling the initial match point determination module 330b.

Next, the calculation unit 347 may determine second candidate match points by excluding fourth non-utilized match points and fifth non-utilized match points in sequence from the second initial match points IMP_B.

At this time, the fourth non-utilized match points may be determined by the fourth non-utilized match point determination unit 344, and the fifth non-utilized match points may be determined by the fifth non-utilized match point determination unit 345.

The fourth non-utilized match point determination unit 344 and the fifth non-utilized match point determination unit 345 may determine the fourth non-utilized match points and the fifth non-utilized match points from the second initial match points IMP_B in the same manner as the driving method of the first non-utilized match point determination unit 341 and the second non-utilized match point determination unit 342, respectively.

That is, the first non-utilized match point determination unit 341 may determine the first non-utilized match points from the first initial match points IMP_A of the preprocessed image pair PIP as described above with reference to FIG. 6a, whereas the fourth non-utilized match point determination unit 344 may determine the fourth non-utilized match points from the second initial match points IMP_B of the cropped image pair CIP by utilizing the same method as the method described above with reference to FIG. 6a. In addition, the second non-utilized match point determination unit 342 may determine the second non-utilized match points from the first initial match points IMP_A of the preprocessed image pair PIP as described above with reference to FIG. 6b, whereas the fifth non-utilized match point determination unit 345 may determine the fifth non-utilized match points from the second initial match points IMP_B of the cropped image pair CIP by utilizing the same method as the method described above with reference to FIG. 6b.

Next, the calculation unit 347 may determine whether the number of second candidate match points determined according to the control of the control signal CS exceeds a second reference number.

At this time, the second reference number may be four, but it is apparent that the second reference number is not limited thereto. The first reference number and the second reference number may be the same as or different from each other.

Next, if the number of second candidate match points exceeds the second reference number, the calculation unit 347 may determine the result obtained by excluding the sixth non-utilized match points from the second candidate match points as the valid match points VMP.

In this case, the sixth non-utilized match points may be determined by the sixth non-utilized match point determination unit 346. The sixth non-utilized match point determination unit 346 may determine the sixth non-utilized match points from the second initial match points IMP_B in the same manner as the driving method of the third non-utilized match point determination unit 343.

That is, the third non-utilized match point determination unit 343 may determine the third non-utilized match points from the first initial match points IMP_A of the preprocessed image pair PIP as described above with reference to FIG. 6c, whereas the sixth non-utilized match point determination unit 346 may determine the sixth non-utilized match points from the second initial match points IMP_B of the cropped image pair CIP by utilizing the same method as the method described above with reference to FIG. 6c.

Next, if the number of second candidate match points is less than or equal to the second reference number, the calculation unit 347 may drop the first initial match points IMP_A and the second initial match points IMP_B.

As such, the calculation unit 347 of the present disclosure can exclude the non-utilized match points in sequence from the initial match points according to predetermined conditions regarding the number of initial match points (first initial match points, second initial match points) and the number of non-utilized match points, and accordingly, has a remarkable effect of being able to reduce the amount of calculation when performing image stitching.

Referring again to FIGS. 1 and 7, the image stitching module 350b may generate a stitched image SI by performing image stitching between a plurality of images.

As some examples, the image stitching module 350b may generate the stitched image SI based on the determined valid match points VMP.

In this case, the valid match points VMP may include first valid match points (a result obtained by excluding the first to third non-utilized match points from the first initial match points IMP_A) or second valid match points (a result obtained by excluding the fourth to sixth non-utilized match points from the second initial match points IMP_B) as described above.

For example, the image stitching module 350b may generate the stitched image SI by performing image stitching between the two images of the preprocessed image pair PIP based on the first valid match points, or may generate the stitched image SI by performing image stitching between the two images of the cropped image pair PIP based on the second valid match points.

At this time, the image stitching module 350b may generate the stitched image SI based on the determined valid match points VMP, and a predetermined image stitching algorithm and/or image stitching model.

For example, the image stitching module 350b may generate the stitched image SI in the manner of connecting, matching, or corresponding the coordinates, relative coordinates, and the like of the determined valid match points VMP in the image via a predetermined image stitching algorithm and/or image stitching model.

As some other examples, the image stitching module 350b may generate the stitched image SI based on the location information of the drone.

For example, the image stitching module 350 may generate the stitched image SI in the manner of estimating a relative pixel distance between the two images of the preprocessed image pair PIP and/or the cropped image pair CIP by using the difference between the pieces of location information of the drone corresponding to each image of the preprocessed image pair PIP and/or the cropped image pair CIP, the specification information of the camera included in the drone 200, and the like.

Meanwhile, the image stitching module 350b may determine an image stitching method based on the data processing result of the valid match point determination module 340b.

For example, if the valid match point determination module 340b has determined the valid match points VMP, the image stitching module 350b may generate the stitched image SI based on the determined valid match points VMP, and a predetermined image stitching algorithm and/or image stitching model, as described above.

Alternatively, if the valid match point determination module 340b has not determined the valid match points VMP and has instead dropped the first initial match points IMP_A and the second initial match points IMP_B, the image stitching module 350b may generate the stitched image SI based on the location information of the drone as described above.

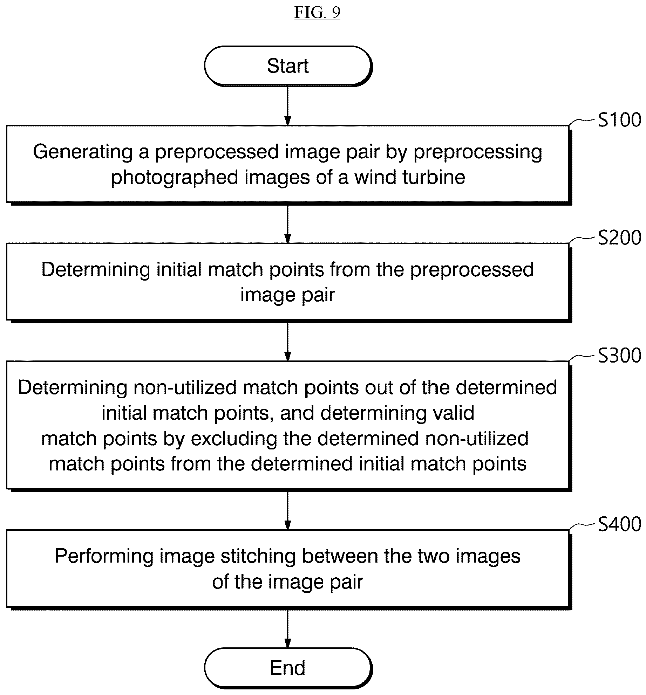

FIG. 9 is a flowchart of an image stitching method for inspecting a wind turbine in accordance with some embodiments of the present disclosure.

Each step (S100 to S400) of the image stitching method for inspecting a wind turbine of FIG. 9 may be performed by the image stitching apparatus 300a of FIG. 2 described above. In the following, the description will be made except for overlapping contents.

First, a preprocessed image pair may be generated by preprocessing photographed images of a wind turbine (S100).

As some examples, the preprocessed image pair may be generated based on the photographed images of the wind turbine and/or metadata. At this time, the preprocessed image pair may be generated through an image pair selection process, a background area removal process, and a resizing process. A detailed description thereof will be omitted.

Next, initial match points may be determined from the preprocessed image pair (S200).

As some examples, the initial match points may be determined using a pre-trained deep learning module. In this case, the deep learning module may include, for example, a LoFTR module, but is not limited thereto. A detailed description thereof will be omitted.

Next, non-utilized match points may be determined out of the determined initial match points, and valid match points may be determined by excluding the determined non-utilized match points from the determined initial match points (S300).

The non-utilized match points may include first non-utilized match points determined based on the contours of the blades, second non-utilized match points determined based on the slopes between the corresponding initial match points in the preprocessed image pair, third non-utilized match points determined based on combined values of the degree of position change of each of the initial match points in the preprocessed image pair, and the like, but examples of the non-utilized match points are not limited thereto.

As some examples, the initial match points existing at a predetermined distance or less from the contours of the blades out of the initial match points may be determined as the first non-utilized match points.

As some other examples, the initial match points in which absolute values of the slopes between the corresponding initial match points in the preprocessed image pair are less than or equal to a predetermined value may be determined as the second non-utilized match points when the difference between the pieces of location information of the drone corresponding to each image in the preprocessed image pair is greater than or equal to a threshold.

As yet some other examples, the degrees of position change of the plurality of initial match points in the preprocessed image pair may each be calculated, and the third non-utilized match points may be determined based on an average value of the calculated degrees of position change of each initial match point. A detailed description thereof will be omitted.

Next, image stitching between the two images of the image pair may be performed (S400).

As some examples, the image stitching may be performed based on the determined valid match points. A detailed description thereof will be omitted.

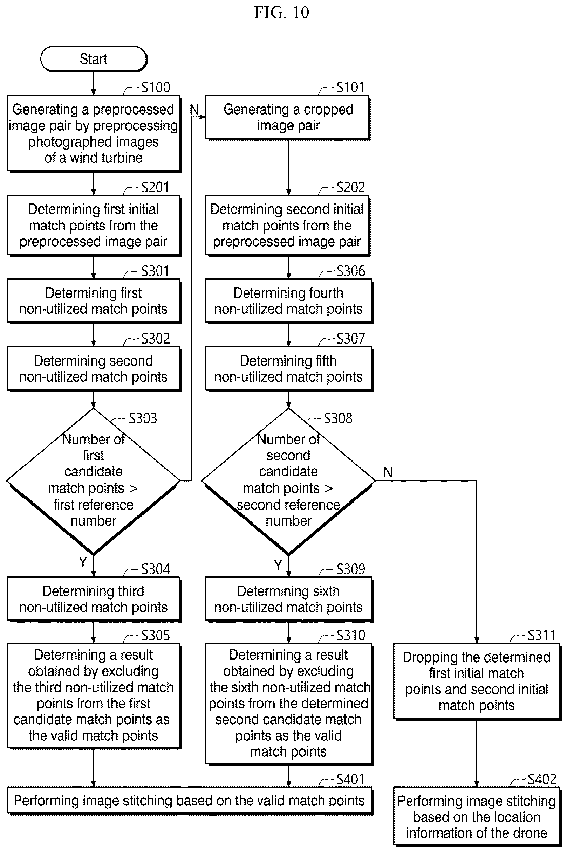

FIG. 10 is a flowchart of an image stitching method for inspecting a wind turbine in accordance with some other embodiments of the present disclosure.

Each step of the image stitching method for inspecting a wind turbine of FIG. 10 may be performed by the image stitching apparatus 300b of FIG. 7 described above. In the following, the description will be made except for overlapping contents.

First, a preprocessed image pair may be generated by preprocessing photographed images of a wind turbine (S 100). Step S100 has been described above with reference to FIG. 9, and will thus be omitted here.

Next, first initial match points may be determined from the preprocessed image pair (S201). At this time, step S201 may mean the same step as step S200 of FIG. 9. A detailed description thereof will be omitted.

Next, first non-utilized match points may be determined (S301).

As some examples, the first initial match points existing at a predetermined distance or less from the contours of the blades out of the first initial match points may be determined as the first non-utilized match points. A detailed description thereof will be omitted.

Next, second non-utilized match points may be determined (S302).

As some examples, the first initial match points in which absolute values of the slopes between the corresponding first initial match points in the preprocessed image pair are less than or equal to a predetermined value may be determined as the second non-utilized match points when the difference between the pieces of location information of the drone corresponding to each image in the preprocessed image pair is greater than or equal to a threshold. A detailed description thereof will be omitted.

Next, it may be determined whether the number of first candidate match points exceeds a first reference number (S303). The first candidate match points may refer to a result obtained by excluding the first and second non-utilized match points from the first initial match points. The first reference number may be four, but it is apparent that embodiments are not limited thereto.

At this time, if the number of first candidate match points exceeds the first reference number, third non-utilized match points may be determined (S304).

As some examples, the degrees of position change of the plurality of first initial match points in the preprocessed image pair may each be calculated, and the third non-utilized match points may be determined based on an average value of the calculated degrees of position change of each first initial match point. A detailed description thereof will be omitted.

Next, a result obtained by excluding the third non-utilized match points from the first candidate match points may be determined as the valid match points (S305).

Next, image stitching may be performed based on the valid match points (S401).

On the other hand, if the number of first candidate match points is less than or equal to the first reference number, a cropped image pair may be generated (S101).

As some examples, the cropped image pair may be generated by cropping each image of the selected image pair into a predetermined number of pairs. At this time, the cropped image pair may be the result of performing not only a cropping process but also preprocessing processes such as image pair selection, background area removal, and resizing.

Next, second initial match points may be determined from the cropped image pair (S202). At this time, a method similar to the method described above in step S201 may be used. That is, step S201 is a process of determining the initial match points (first initial match points) in the preprocessed image pair, and step S202 is a process of determining the initial match points (second initial match points) in the cropped image pair.

Next, fourth non-utilized match points may be determined (S306).

As some examples, the second initial match points existing at a predetermined distance or less from the contours of the blades out of the second initial match points may be determined as the fourth non-utilized match points. A detailed description thereof will be omitted.

Next, fifth non-utilized match points may be determined (S307).

As some examples, the second initial match points in which absolute values of the slopes between the corresponding second initial match points in the cropped image pair are less than or equal to a predetermined value may be determined as the fifth non-utilized match points when the difference between the pieces of location information of the drone corresponding to each image in the cropped image pair is greater than or equal to a threshold. A detailed description thereof will be omitted.

Next, it may be determined whether the number of second candidate match points exceeds a second reference number (S308). The second candidate match points may refer to a result obtained by excluding the fourth and fifth non-utilized match points from the second initial match points. The second reference number may be four, but is not limited thereto, of course. The first reference number and the second reference number may be the same or different.

At this time, if the number of second initial match points exceeds the second reference number, sixth non-utilized match points may be determined (S309).

As some examples, the degrees of position change of the plurality of second initial match points in the cropped image pair may each be calculated, and the sixth non-utilized match points may be determined based on an average value of the calculated degrees of position change of each second initial match point. A detailed description thereof will be omitted.

Next, a result obtained by excluding the sixth non-utilized match points from the second candidate match points may be determined as the valid match points (S310).

Next, image stitching may be performed based on the valid match points (S401).

On the other hand, if the number of second initial match points is less than or equal to the second reference number, the determined first initial match points and second initial match points may be dropped (S311).

Next, image stitching may be performed based on the location information of the drone (S402). A detailed description thereof will be omitted.

The above description is merely an illustrative description of the technical idea of the present embodiments, and those of ordinary skill in the art to which the present embodiments pertain will be able to make various modifications and variations without departing from the essential characteristics of the embodiments. Therefore, the present embodiments are not intended to limit the technical idea of the present embodiments but to describe it, and the scope of the technical idea of the present embodiments is not limited by these embodiments. The scope of protection of the present embodiments should be construed by the accompanying claims, and all technical ideas within the scope equivalent thereto should be construed as being included in the scope of the present embodiments.

## Claims

1. An image stitching apparatus (300) for inspecting a wind turbine (100), comprising:
a preprocessing module (320a) configured to generate a preprocessed image pair by removing background areas around blades of a wind turbine (100) from photographed images of the wind turbine (100) captured by a drone (200);
an initial match point determination module (330a) configured to determine first initial match points in the preprocessed image pair by using a pre-trained deep learning module (331);
a valid match point determination module (340a) configured to determine non-utilized match points out of the determined first initial match points, and determine valid match points by excluding the determined non-utilized match points from the determined first initial match points; and
an image stitching module (350a) configured to perform image stitching between a plurality of images,
wherein the valid match point determination module (340a) comprises:
a first non-utilized match point determination unit (341) configured to determine first initial match points existing at a predetermined distance or less from the contours of the blades out of the first initial match points as a first non-utilized match points,
a second non-utilized match point determination unit (342) configured to determine first initial match points in which absolute values of slopes of match lines between the corresponding first initial match points in the preprocessed image pair are less than or equal to a predetermined value as a second non-utilized match points when a difference between pieces of location information of the drone (200) corresponding to each image in the preprocessed image pair is greater than or equal to a threshold,
a third non-utilized match point determination unit (343) configured to calculate degrees of position change of the plurality of first initial match points in the preprocessed image pair, respectively, and determine a third non-utilized match points based on an average value of the calculated degrees of position change of each first initial match point,
a calculation unit (347) configured to determine the valid match points by excluding the first to third non-utilized match points in sequence from the first initial match points according to predetermined conditions regarding the number of the first initial match points and the number of the first to third non-utilized match points,
wherein the calculation unit (347):
determines first candidate match points by excluding the first non-utilized match points and the second non-utilized match points in sequence from the first initial match points, and
determines whether the number of the determined first candidate match points exceeds a first reference number,
wherein if the number of the determined first candidate match points is less than or equal to the first reference number,
the preprocessing module (320a) generates a cropped image pair by cropping the photographed images according to a predetermined criterion,
the initial match point determination module (330a) determines second initial match points in the cropped image pair by using the pre-trained deep learning module (331), and
the calculation unit (347) determines the valid match points based on the determined second initial match points.

2. The image stitching apparatus (300) for inspecting a wind turbine (100) of claim 1, wherein if the number of the determined first candidate match points exceeds the first reference number,
the calculation unit (347) determines a result obtained by excluding the third non-utilized match points from the first candidate match points as the valid match points, and
the image stitching module (350a) performs image stitching between two images of the preprocessed image pair based on the determined valid match points.

3. The image stitching apparatus (300) for inspecting a wind turbine (100) of claim 1, wherein the calculation unit (347):
determines second candidate match points by excluding fourth non-utilized match points and fifth non-utilized match points in sequence from the second initial match points, and
determines whether the number of the determined second candidate match points exceeds a second reference number, and
wherein the fourth non-utilized match points are determined based on the contours of the blades in the cropped image pair, and
the fifth non-utilized match points are determined based on absolute values of slopes of match lines between the corresponding second initial match points in the cropped image pair.

4. The image stitching apparatus (300) for inspecting a wind turbine (100) of claim 3, wherein if the number of the determined second candidate match points exceeds the second reference number,
the calculation unit (347) determines a result obtained by excluding sixth non-utilized match points from the determined second candidate match points as the valid match points, and
the image stitching module (350a) performs image stitching between two images of the cropped image pair based on the determined valid match points, and
wherein the sixth non-utilized match points are determined based on combined values of a degree of position change of each of the second initial match points in the cropped image pair.

## Patentansprüche

1. Vorrichtung (300) zum Zusammenfügen von Bildern zur Inspektion einer Windturbine (100), die Folgendes aufweist:
ein Vorverarbeitungsmodul (320a), das dazu ausgelegt ist, ein vorverarbeitetes Bildpaar zu erzeugen, durch Entfernen von Hintergrundbereichen um die Rotorblätter einer Windturbine (100) aus den von einer Drohne (200) aufgenommenen Bildern der Windturbine (100);
ein Modul (330a) zur Bestimmung anfänglicher Übereinstimmungspunkte, das dazu ausgelegt ist, erste anfängliche Übereinstimmungspunkte in dem vorverarbeiteten Bildpaar unter Verwendung eines vortrainierten Deep-Learning-Moduls (331) zu bestimmen;
ein Modul (340a) zur Bestimmung gültiger Übereinstimmungspunkte, das dazu ausgelegt ist, nicht verwendete Übereinstimmungspunkte aus den bestimmten ersten anfänglichen Übereinstimmungspunkten zu bestimmen und gültige Übereinstimmungspunkte zu bestimmen, durch Ausschließen der bestimmten nicht verwendeten Übereinstimmungspunkte aus den bestimmten ersten anfänglichen Übereinstimmungspunkten; und
ein Modul (350a) zum Zusammenfügen von Bildern, das dazu ausgelegt ist, Bildzusammenfügung einer Vielzahl von Bildern durchzuführen,
wobei das Modul (340a) zur Bestimmung gültiger Übereinstimmungspunkte Folgendes aufweist:
eine erste Einheit (341) zur Bestimmung nicht verwendeter Übereinstimmungspunkte, die dazu ausgelegt ist, erste anfängliche Übereinstimmungspunkte, die sich in einem vorbestimmten oder geringeren Abstand von den Umrissen der Rotorblätter befinden, aus den ersten anfänglichen Übereinstimmungspunkten als erste nicht verwendete Übereinstimmungspunkte zu bestimmen,
eine zweite Einheit (342) zur Bestimmung nicht verwendeter Übereinstimmungspunkte, die dazu ausgelegt ist, erste anfängliche Übereinstimmungspunkte, die absolute Werte der Steigungen der Übereinstimmungsgeraden zwischen den entsprechenden ersten anfänglichen Übereinstimmungspunkten in dem vorverarbeiteten Bildpaar aufweisen, die geringer als oder gleich einem vorbestimmten Wert sind, als zweite nicht verwendete Übereinstimmungspunkte zu bestimmen, wenn eine Differenz zwischen Positionsinformationsstücken der Drone (200), die jedem Bild in dem vorverarbeiteten Bildpaar entsprechen, größer als oder gleich einem Schwellenwert ist,
eine dritte Einheit (343) zur Bestimmung nicht verwendeter Übereinstimmungspunkte, die dazu ausgelegt ist, jeweils Positionsveränderungsgrade der Vielzahl an ersten anfänglichen Übereinstimmungspunkten in dem vorverarbeiteten Bildpaar zu berechnen und dritte nicht verwendete Übereinstimmungspunkte basierend auf einem Mittelwert der berechneten Positionsveränderungsgrade jedes ersten Übereinstimmungspunkts zu bestimmen,
eine Berechnungseinheit (347), die dazu ausgelegt ist, die gültigen Übereinstimmungspunkte durch Ausschließen der ersten bis dritten nicht verwendeten Übereinstimmungspunkte in Reihenfolge von den ersten anfänglichen Übereinstimmungspunkten gemäß der vorbestimmten Bedingungen bezüglich der Anzahl der ersten anfänglichen Übereinstimmungspunkte und der Anzahl der ersten bis dritten nicht verwendeten Übereinstimmungspunkte zu bestimmen,
wobei die Berechnungseinheit (347):
erste Kandidatenübereinstimmungspunkte durch Ausschließen der ersten nicht verwendeten Übereinstimmungspunkte und der zweiten nicht verwendeten Übereinstimmungspunkte in Reihenfolge aus den ersten anfänglichen Übereinstimmungspunkten bestimmt, und
bestimmt, ob die Anzahl der bestimmen ersten Kandidatenübereinstimmungspunkte eine erste Referenzanzahl überschreitet,
wobei, wenn die Anzahl der bestimmten ersten Kandidatenübereinstimmungspunkte geringer als oder gleich der ersten Referenzanzahl ist,
das Vorverarbeitungsmodul (320a) ein zugeschnittenes Bildpaar durch Zuschneiden der aufgenommenen Bilder gemäß einem vorbestimmt Kriterium erstellt,
das Modul (330a) zur Bestimmung anfänglicher Übereinstimmungspunkte, zweite anfängliche Übereinstimmungspunkte in dem zugeschnittenen Bildpaar unter Verwendung eines vortrainierten Deep-Learning-Moduls (331) bestimmt, und
die Berechnungseinheit (347) die gültigen Übereinstimmungspunkte basierend auf den bestimmten zweiten anfänglichen Übereinstimmungspunkten bestimmt.

2. Vorrichtung (300) zum Zusammenfügen von Bildern zur Inspektion einer Windturbine (100) nach Anspruch 1, wobei, wenn die Anzahl der vorbestimmten ersten Kandidatenübereinstimmungspunkt die erste Referenzanzahl überschreitet,
die Berechnungseinheit (347) ein Ergebnis, das durch Ausschließen der dritten nicht verwendeten Übereinstimmungspunkte aus den ersten Kandidatenübereinstimmungspunkten erhalten wird, als die gültigen Übereinstimmungspunkte bestimmt, und
das Modul (350a) zum Zusammenfügen von Bildern Bildzusammenfügung von zwei Bildern des vorverarbeiteten Bildpaars basierend auf den bestimmten Übereinstimmungspunkten durchführt.

3. Vorrichtung (300) zum Zusammenfügen von Bildern zur Inspektion einer Windturbine (100) nach Anspruch 1, wobei die Berechnungseinheit (347):
zweite Kandidatenübereinstimmungspunkte durch Ausschließen vierter nicht verwendeter Übereinstimmungspunkte und fünfter nicht verwendeter Übereinstimmungspunkte in Reihenfolge aus den zweiten anfänglichen Übereinstimmungspunkten bestimmt, und
bestimmt, ob die Anzahl der bestimmten zweiten Kandidatenübereinstimmungspunkte eine zweite Referenzanzahl überschreitet, und
wobei die vierten nicht verwendeten Übereinstimmungspunkte basierend auf den Umrissen der Rotorblätter in dem zugeschnittenen Bildpaar bestimmt werden; und
die fünften nicht verwendeten Übereinstimmungspunkte basierend auf absoluten Werten der Steigungen der Übereinstimmungsgeraden zwischen den entsprechenden zweiten anfänglichen Übereinstimmungspunkten in dem zugeschnittenen Bildpaar bestimmt werden.

4. Vorrichtung (300) zum Zusammenfügen von Bildern zur Inspektion einer Windturbine (100) nach Anspruch 3, wobei, wenn die Anzahl der vorbestimmten zweiten Kandidatenübereinstimmungspunkt die zweite Referenzanzahl überschreitet,
die Berechnungseinheit (347) ein Ergebnis, das durch Ausschließen der sechsten nicht verwendeten Übereinstimmungspunkte aus den bestimmten zweiten Kandidatenübereinstimmungspunkten erhalten wird, als die gültigen Übereinstimmungspunkte bestimmt, und
das Modul (350a) zum Zusammenfügen von Bildern Bildzusammenfügung von zwei Bildern des zugeschnittenen Bildpaars basierend auf den bestimmten gültigen Übereinstimmungspunkten durchführt, und
wobei die sechsten nicht verwendeten Übereinstimmungspunkte basierend auf kombinierten Werten eines Positionsveränderungsgrads jedes der zweiten anfänglichen Übereinstimmungspunkte in dem zugeschnittenen Bildpaar bestimmt werden.

## Revendications

1. Appareil d'assemblage d'images (300) destiné à l'inspection d'une éolienne (100), comprenant :
un module de prétraitement (320a) configuré pour générer une paire d'images prétraitées par suppression de zones d'arrière-plan autour de pales d'une éolienne (100) à partir d'images photographiées de l'éolienne (100) capturées par un drone (200) ;
un module de détermination de points de correspondance initiaux (330a) configuré pour déterminer des premiers points de correspondance initiaux dans la paire d'images prétraitées, au moyen d'un module d'apprentissage profond pré-entraîné (331) ;
un module de détermination de points de correspondance valides (340a) configuré pour déterminer des points de correspondance non utilisés parmi les premiers points de correspondance initiaux déterminés, et pour déterminer des points de correspondance valides en excluant les points de correspondance non utilisés déterminés, à partir des premiers points de correspondance initiaux déterminés ; et
un module d'assemblage d'images (350a) configuré pour effectuer un assemblage d'images entre une pluralité d'images,
dans lequel le module de détermination de points de correspondance valides (340a) comprend :
une première unité de détermination de points de correspondance non utilisés (341) configurée pour déterminer des premiers points de correspondance initiaux existant à une distance inférieure ou égale à une distance prédéterminée par rapport aux contours des pales, parmi les premiers points de correspondance initiaux, en tant que premiers points de correspondance non utilisés,
une deuxième unité de détermination de points de correspondance non utilisés (342) configurée pour déterminer des premiers points de correspondance initiaux dans lesquels des valeurs absolues de pentes de lignes de correspondance entre les premiers points de correspondance initiaux correspondants dans la paire d'images prétraitées sont inférieures ou égales à une valeur prédéterminée, en tant que deuxièmes points de correspondance non utilisés, lorsqu'une différence entre des informations de localisation du drone (200) correspondant à chaque image dans la paire d'images prétraitées est supérieure ou égale à un seuil,
une troisième unité de détermination de points de correspondance non utilisés (343) configurée pour calculer des degrés de changement de position de la pluralité de premiers points de correspondance initiaux dans la paire d'images prétraitées, respectivement, et pour déterminer des troisièmes points de correspondance non utilisés sur la base d'une valeur moyenne de degrés calculés de changement de position de chaque premier point de correspondance initial,
une unité de calcul (347) configurée pour déterminer les points de correspondance valides en excluant les premiers à troisièmes points de correspondance non utilisés en séquence à partir des premiers points de correspondance initiaux en fonction de conditions prédéterminées relatives au nombre des premiers points de correspondance initiaux et au nombre des premiers à troisièmes points de correspondance non utilisés,
dans lequel l'unité de calcul (347) :
détermine des premiers points de correspondance candidats en excluant les premiers points de correspondance non utilisés et les deuxièmes points de correspondance non utilisés en séquence à partir des premiers points de correspondance initiaux, et
détermine si le nombre des premiers points de correspondance candidats déterminés dépasse un premier nombre de référence,
dans lequel, si le nombre des premiers points de correspondance candidats déterminés est inférieur ou égal au premier nombre de référence,
le module de prétraitement (320a) génère une paire d'images recadrées en rognant les images photographiées en fonction d'un critère prédéterminé,
le module de détermination de points de correspondance initiaux (330a) détermine des deuxièmes points de correspondance initiaux dans la paire d'images recadrées au moyen du module d'apprentissage profond pré-entraîné (331), et
l'unité de calcul (347) détermine les points de correspondance valides sur la base des deuxièmes points de correspondance initiaux déterminés.

2. Appareil d'assemblage d'images (300) destiné à l'inspection d'une éolienne (100) selon la revendication 1, dans lequel, si le nombre des premiers points de correspondance candidats déterminés dépasse le premier nombre de référence,
l'unité de calcul (347) détermine un résultat obtenu en excluant les troisièmes points de correspondance non utilisés à partir des premiers points de correspondance candidats, en tant que points de correspondance valides, et
le module d'assemblage d'images (350a) effectue un assemblage d'images entre deux images de la paire d'images prétraitées sur la base des points de correspondance valides déterminés.

3. Appareil d'assemblage d'images (300) destiné à l'inspection d'une éolienne (100) selon la revendication 1, dans lequel l'unité de calcul (347) :
détermine des deuxièmes points de correspondance candidats en excluant des quatrièmes points de correspondance non utilisés et des cinquièmes points de correspondance non utilisés en séquence à partir des deuxièmes points de correspondance initiaux, et
détermine si le nombre des deuxièmes points de correspondance candidats déterminés dépasse un deuxième nombre de référence, et
dans lequel les quatrièmes points de correspondance non utilisés sont déterminés sur la base des contours des pales dans la paire d'images recadrées, et
les cinquièmes points de correspondance non utilisés sont déterminés sur la base de valeurs absolues de pentes de lignes de correspondance entre les deuxièmes points de correspondance initiaux correspondants dans la paire d'images recadrées.

4. Appareil d'assemblage d'images (300) destiné à l'inspection d'une éolienne (100) selon la revendication 3, dans lequel, si le nombre des deuxièmes points de correspondance candidats déterminés dépasse le deuxième nombre de référence,
l'unité de calcul (347) détermine un résultat obtenu en excluant des sixièmes points de correspondance non utilisés à partir des deuxièmes points de correspondance candidats déterminés, en tant que points de correspondance valides, et
le module d'assemblage d'images (350a) effectue un assemblage d'images entre deux images de la paire d'images recadrées sur la base des points de correspondance valides déterminés, et
dans lequel les sixièmes points de correspondance non utilisés sont déterminés sur la base de valeurs combinées d'un degré de changement de position de chacun des deuxièmes points de correspondance initiaux dans la paire d'images recadrées.
